# EUROPEAN PATENT APPLICATION

(11) **EP 3 753 723 A1**
(43) Date of publication of application: **23.12.2020**
(21) Application number: 20179749.5
(22) Date of filing: 12.06.2020
(51) Int. Cl.: B30B 9/22, B30B 9/26, C12G 1/00

(54) **MEMBRANE PRESS**

(30) Priority: 20.06.2019 IT 201900009654
(71) Applicant: Diemme Enologia S.p.A., 48022 Lugo (Ravenna) (IT)
(72) Inventor: MELANDRI, Massimo, 48022 Lugo (RA) (IT)
(74) Representative: Corradini, Corrado

(57) **Abstract**

A press (10) of membrane type is described, comprising:
- a tank (15);
- a flexible membrane (25) that divides the tank (15) into a first chamber (30), inside of which the product (P) to be squeezed is received and provided with discharge mouths (45) for discharging the extracted liquid, and a second chamber (35) provided with a respective discharge mouth (45), and adapted to contain a fluid under pressure by means of which the membrane (25) is pressed against the product (P) to be squeezed;
characterized in that the membrane (25) has at least one permeable portion (55) put in fluid communication with said discharge mouth (45) of the second chamber (35), by means of a collection channel (60) placed inside said second chamber (35).

## Description

### TECHNICAL FIELD

The present invention relates to so-called membrane presses, a typical use of which is in the oenological field.

### EXISTING TECHNIQUE

As is known, membrane presses generally comprise a cylindrical tank having a horizontal axis that is adapted to rotate on itself about a longitudinal axis thereof, which tank is internally provided with a longitudinal membrane fixed to the inner surface of the tank itself so as to divide the latter into two separate chambers.

The product to be squeezed, generally fruit, for example grapes, is intended to be loaded into one of said chambers, and an operating fluid, such as air under pressure, which is intended to push the membrane against the product, is intended to be introduced into the other.

Moreover, a series of longitudinal channels which walls are conveniently perforated to allow the passage of the juice or must coming out of the product due to the effect of the push of the membrane, is provided on the inner surface of the chamber containing the product.

Said channels are closed at one end, while they have, at the opposite end, a mouth that discharges the juice or must into a common collection and removal tank.

In particular, said collection tank is constrained to the frame in order to be removed for maintenance and cleaning operations.

In general, a complete pressing cycle carried out with similar membrane presses comprises steps in which the tank is stationary and is put under pressure, i.e. steps in which the membrane is put under pressure on said product to be squeezed, steps in which the same is caused to rotate to loosen the compacted mass of product, with simultaneous decrease (or also cancellation) of the pressure acting on the membrane, and steps in which the tank is rotated so as to cause the juice or must to drain from the mouths to the collection tank.

In order to extract all the juice or must within a same pressing cycle, said steps are to be repeated several times, therefore making the process repetitive and slow.

In an attempt to limit the number of repetitions of said steps within a pressing cycle, presses with a central membrane have been developed, i.e. provided with a membrane that develops only in a central zone of the tank, and therefore arranged so as to be surrounded by the product to be squeezed, thus maximizing the surface thereof through which the extracted liquid is collected, to the detriment of the overall development of the membrane.

However, such types of presses are not suitable for certain types of processing, for example they are inadequate for processing whole grapes, and moreover the overall structure of the tank and the positioning of the membrane make the maintenance and cleaning operations of the tank and the replacement of the membrane itself, particularly complicated.

Moreover, a known drawback is that despite the repetition of the aforesaid steps, a layer of stagnating juice or must that is not able to cross the agglomerate defined by the pressed product and to reach the channels, and therefore the collection tank, forms at the interface between the membrane and the product to be squeezed.

It therefore is an object of the present invention to make available a membrane press that allows speeding up the pressing cycle and that simultaneously allows obviating such drawback of the known technique.

A further object is to achieve such objectives in the context of a rational, effective and affordable solution.

These objects are achieved by the features of the invention set forth in the independent claim.

The dependent claims outline preferred and/or particularly advantageous aspects of the invention.

### DESCRIPTION OF THE INVENTION

In particular, the invention makes available a membrane press comprising:
- a tank;
- a flexible membrane that divides the tank into a first chamber, inside of which the product to be squeezed is received and provided with discharge mouths for discharging the extracted liquid, and a second chamber provided with a respective discharge mouth, and adapted to contain a fluid under pressure by means of which the membrane is pressed against the product to be squeezed;
   characterized in that the membrane has at least one permeable portion put in fluid communication with said discharge mouth of the second chamber, by means of a collection channel placed inside said second chamber.

Thanks to such solution, a membrane press is made available that allows collecting the liquid (juice or must) extracted from the product (generally fruit, for example grapes), both from the first chamber and from the second chamber.

In this way, the formation of stagnating liquid at the interface between the membrane and the product to be squeezed is obviated; moreover, the quantity of liquid collected in a same step is increased and therefore the number of repetitions of the various steps is decreased within a same pressing cycle, and overall the pressing cycle of the product is speeded up with respect to the devices of the known art.

Another aspect of the invention provides for the collection channel to be rigidly fixed to the membrane at said permeable portion thereof.

Thanks to such solution, the collection channel is fixed to the membrane so as to move jointly therewith and so as to collect the liquid that crosses the permeable portion of the membrane in any usage step of the membrane during the pressing cycle.

A further aspect of the invention provides for the membrane to have several separate permeable portions, each put in fluid communication with a respective discharge mouth of the second chamber by means of a respective collection channel placed in the second chamber.

Thanks to such solution, the effectiveness of the press is significantly increased thanks to the presence of several permeable portions arranged along the development of the membrane, thus allowing to collect the liquid at the interface between membrane and product in a further quicker manner and therefore further speeding up the pressing cycle. Again, another aspect of the invention provides for the press to further comprise conveyor pipes placed in the second chamber, which are adapted to convey said fluid under pressure towards the membrane.

Thanks to such solution, the quantity of fluid required to put the membrane under pressure on the product is minimized, thus allowing the use of an operating machine (for example, a compressor) for generating pressure having less power and therefore more contained sizes, therefore within the scope of a particularly affordable solution.

Another aspect of the invention provides for the permeable portion of the membrane to extend continuously along the entire axial development of the tank along a longitudinal axis A.

Thanks to such solution, the membrane is provided with a particularly extended permeable portion that allows collecting the liquid extracted along the whole longitudinal development of the tank, thus significantly speeding up the pressing cycle.

A further aspect of the invention provides for the permeable portion of the membrane to extend continuously along an entire development of the tank along a transverse axis of the tank itself.

Thanks to such solution, the membrane is provided with a particularly extended permeable portion that allows collecting the liquid extracted along the whole transverse development of the tank, thus significantly speeding up the pressing cycle.

Again, a further aspect of the invention provides for the membrane to be made of polyurethane.

Thanks to such solution, the membrane is made of a material that is easy to process and also easily available on the market, and therefore within the scope of a particularly affordable solution.

Another aspect of the invention provides for the collection channel to be made of an elastic material.

Thanks to such solution, the collection channel is particularly effective in adapting to the elastic deformation of the membrane, thus remaining constrained to the permeable portion thereof.

### BRIEF DESCRIPTION OF THE DRAWINGS

Further features and advantages of the invention will be more apparent after reading the following description provided by way of a non-limiting example, with the aid of the accompanying drawings.

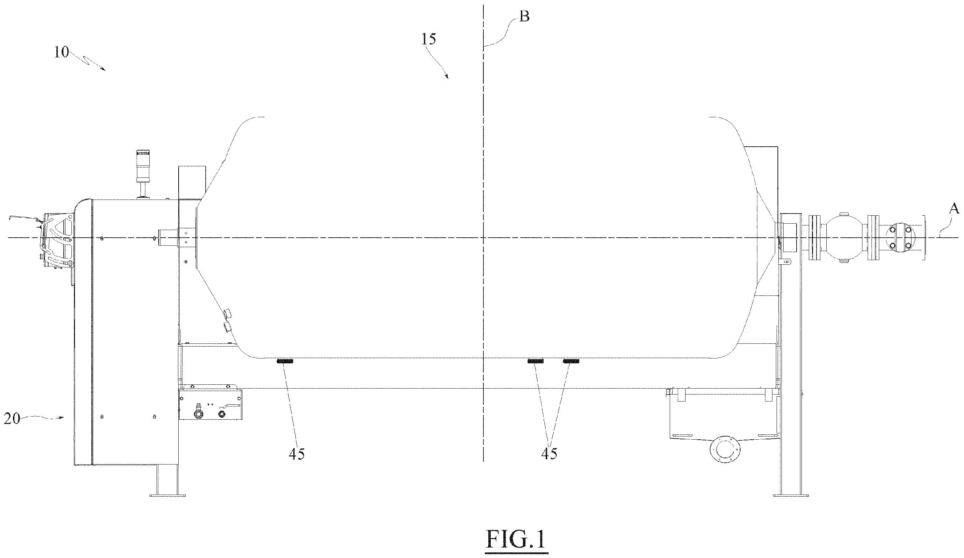

Figure 1 is a front side view of a membrane press according to the invention.
Figure 2 is a schematic transparent view according to a median transverse plane, of a first embodiment of the membrane press according to the invention.
Figure 3 is a schematic transparent view according to a median transverse plane, of a different embodiment of the first embodiment of the membrane press according to the invention.
Figure 4 is a schematic transparent view according to a median transverse plane, of a second embodiment of the membrane press according to the invention.
Figure 5 is a front side schematic partially transparent view of the membrane press in figure 4.

### IMPROVED METHOD FOR IMPLEMENTING THE INVENTION

With particular reference to such drawings, a membrane press for pressing operations of a product P to be squeezed, for example grapes or fruit in general, and collecting the extracted liquid (juice or must), is indicated as a whole with 10.

The press 10 comprises a tank 15, preferably cylindrical and elongated along a longitudinal axis A thereof.

The tank 15 is rotatably associated with a support frame 20, preferably arranged with longitudinal axis A therefore horizontal, and is connected to an operating arrangement (not described in detail because in itself known) by means of which it is put into rotation on itself, for example with respect to said longitudinal axis A.

The tank 15 is provided internally with a longitudinal (i.e. that extends inside the tank along the entire development thereof with respect to said longitudinal axis A) and flexible membrane 25.

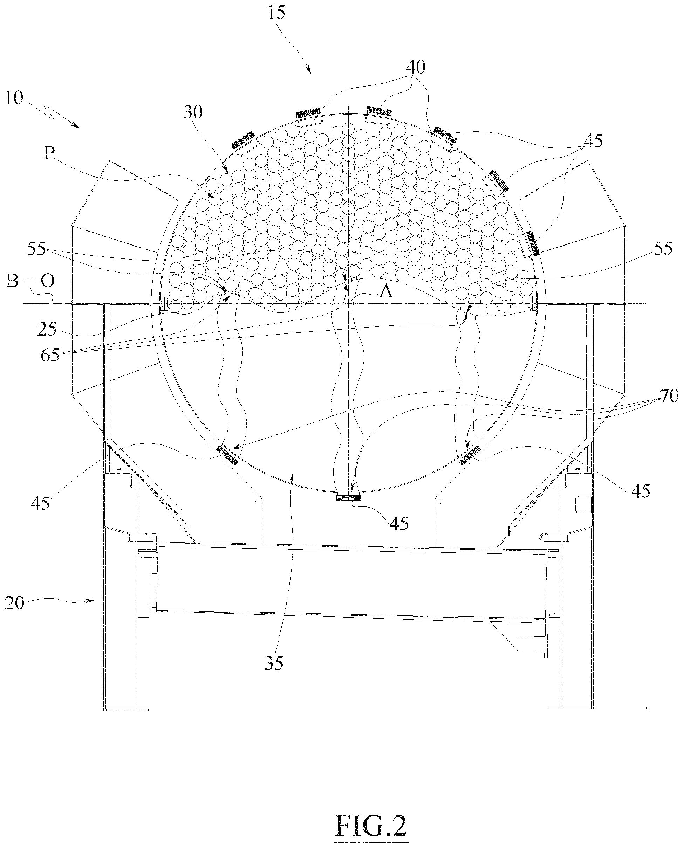

As shown in figures 2 to 4, the membrane 25 may further extend along the entire transverse development of the tank 15 with respect to a transverse axis B orthogonal to said longitudinal axis A.

The membrane 25 is for example, made of polyurethane, however it is not excluded in alternative embodiments for it to be made of another flexible polymeric material or of another flexible material in general.

The membrane 25 is fixed to the tank 15, preferably at (close to) a longitudinal centreline plane O thereof.

Therefore, the tank 15 is divided into two separate chambers by the membrane 25.

The first chamber 30 is prepared to contain the product P to be squeezed; moreover, there is a series of perforated longitudinal channels 40 on the tank 15 at the first chamber 30, which channels are individually provided with a discharge mouth 45 out of which exits the liquid (juice or must) extracted from the product P.

Furthermore, the tank 15 has, at said first chamber 30, one or more access mouths (for example, defined by the discharge mouths 45 themselves) by means of which the product P to be squeezed is introduced.

The second chamber 35 is adapted to be connected to a source of a fluid under pressure by means of which the membrane 25 is put under pressure against said product P to be squeezed.

More precisely, the second chamber 35 is provided with a connecting mouth (not illustrated) by means of which an operating machine is operatively fluidly airtight connected, which machine is adapted to introduce a fluid under pressure into the second chamber 35.

For example, said operating machine, which in itself is known, may comprise a compressor.

The second chamber 35 is therefore adapted to contain a fluid, for example air, put under pressure by the operating machine so as to elastically deform the membrane 25 and put it under pressure on said product P to be squeezed.

It is not excluded in alternative embodiments for the fluid put under pressure to be different from air.

The membrane 25 is therefore actuated, by means of the fluid under pressure, between a first configuration in which it does not exert pressure on the product P to be squeezed, and a second configuration in which it is elastically (and reversibly) (swollen) deformed and exerts pressure on the product P to be squeezed.

In particular, the operating machine is suitable for varying the pressure of the fluid introduced into the second chamber 35 between a resting value, corresponding to the first configuration of the membrane 25 (i.e. when the membrane 25 does not exert pressure on the product P to be squeezed), comprised between 0.2 bar and 2.2 bar, and an operating value, corresponding to the second configuration of the membrane 25 (i.e. when the membrane 25 exerts pressure on the product P to be squeezed), comprised between 0.2 bar and 2.2 bar.

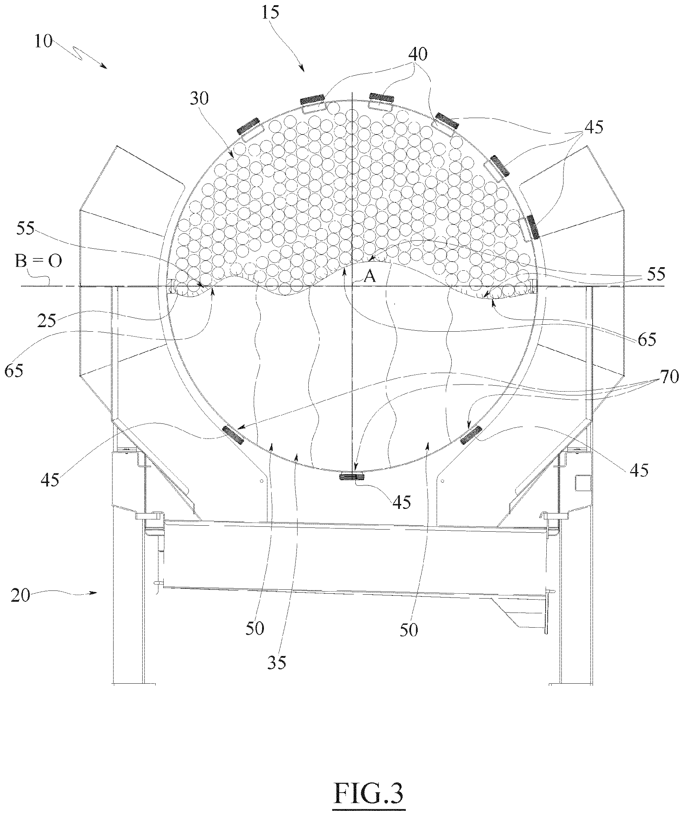

For example as shown in figure 3, it is possible to provide for the press 10 to comprise conveyor pipes 50 (entirely) inserted in the second chamber 35, which are configured so as to convey said fluid under pressure towards the membrane 25.

For such purpose, each conveyor pipe 50 defines an open through channel at opposite axial ends of the pipe itself, of which a first axial end is in fluid-tight communication with the operating machine by means of the connecting mouth, and a second axial end is rigidly fixed, for example by means of gluing or welding, to the membrane 25 itself.

The membrane 25 has at least one permeable portion 55.

More precisely, the membrane 25 has at least one porous portion, with pores configured so as to allow the passage of the liquid (juice or must) extracted from the product P through the membrane 25, and therefore from the first chamber 30 to the second chamber 35.

The permeable portion 55 of the membrane 25 is put in fluid communication with a discharge mouth 45 of the second chamber 35, i.e. a discharge mouth 45 conveniently provided in the tank 15 at said second chamber 35, by means of a collection channel 60 associated with said permeable portion 55 and (entirely) placed inside the second chamber 35.

In detail, the collection channel 60 is associated with the permeable portion 55 of the membrane 25 for the entire (longitudinal and transverse) development of the permeable portion 55 itself.

The collection channel 60 substantially is like an (impermeable) tubular body defining a channel provided with a first opening 65 put in fluid-tight communication with the permeable portion 55 of the membrane 25, and with a second opening 70 put in fluid-tight communication with said discharge mouth 45 of the second chamber 35.

The collection channel 60 is directly connected to said permeable portion 55 of the membrane 25, i.e. the first opening 65 is in direct fluid communication with said permeable portion 55 of the membrane 25.

Moreover, the collection channel 60 is in direct fluid communication with said permeable portion 55 of the membrane 25, i.e. the second opening 70 is in direct fluid communication with said discharge mouth 45 of the second chamber 35.

More precisely, the collection channel 60 is rigidly fixed, at the first opening 65, to the permeable portion 55 of the membrane 25, for example by means of gluing. Alternatively, it is possible to provide for the collection channel 60 to be fixed, at the first opening 65, to the permeable portion 55 of the membrane 25 by means of welding. Furthermore, the collection channel 60 is rigidly fixed, at the second opening 70, to the discharge mouth 45 of the second chamber 35, for example by means of gluing.

The collection channel 60 is flexible and preferably is made of an elastic material, for example it is made of reinforced polyurethane.

Preferably as shown in figures 2 to 4, the membrane 25 may have several separate permeable portions, each put in fluid-tight communication with a respective discharge mouth 45 of the second chamber 35, i.e. with a respective discharge mouth 45 provided in the tank 15 at the second chamber 35, by means of a respective collection channel 60 (entirely) placed inside the second chamber 35.

For example, it is possible to provide for each permeable portion 55 of the membrane 25 to be put in fluid-tight communication with several discharge mouths 45 of the second chamber 35 by means of a single respective collection channel 60, and therefore for each collection channel 60 to have a plurality of second openings 70, each in fluid-tight communication with a respective discharge mouth 45 of the second chamber 35.

In a first embodiment illustrated in figures 2 and 3, the membrane 25 has several separate permeable portions 55, i.e. several permeable portions that are fluidly isolated from one another.

In such first embodiment, each permeable portion 55 of the membrane 25 extends along the entire development of the tank 15, along said longitudinal axis A of the tank 15 itself. Moreover, the permeable portions develop along said longitudinal axis A of the tank 15 substantially parallel to one another.

Likewise, each collection channel 60 of a respective permeable portion 55 extends along the entire development of the tank 15, along said longitudinal axis A of the tank 15 itself. For example as shown in figure 2, the overall surface of the permeable portions may be less than half the overall surface of the membrane 25.

Alternatively as shown in figure 3, the overall surface of the permeable portions may be greater than half the overall surface of the membrane 25.

Each permeable portion 55 is in fluid-tight communication with a respective discharge mouth 45 of the second chamber 35 and said discharge mouth is made on the tank 15 in distal position from the first chamber 30, and preferably in position that is diametrically opposite to the discharge mouths 45 of the first chamber 30 with respect to said longitudinal centreline plane O of the tank 15 at (close to) which the membrane 25 is fixed to the tank 15.

In such first embodiment, the first opening 65 and the second opening 70 of each collection channel 60 therefore are spaced apart from each other along a direction orthogonal to said longitudinal centreline plane O at (close to) which the membrane 25 is fixed to the tank 15.

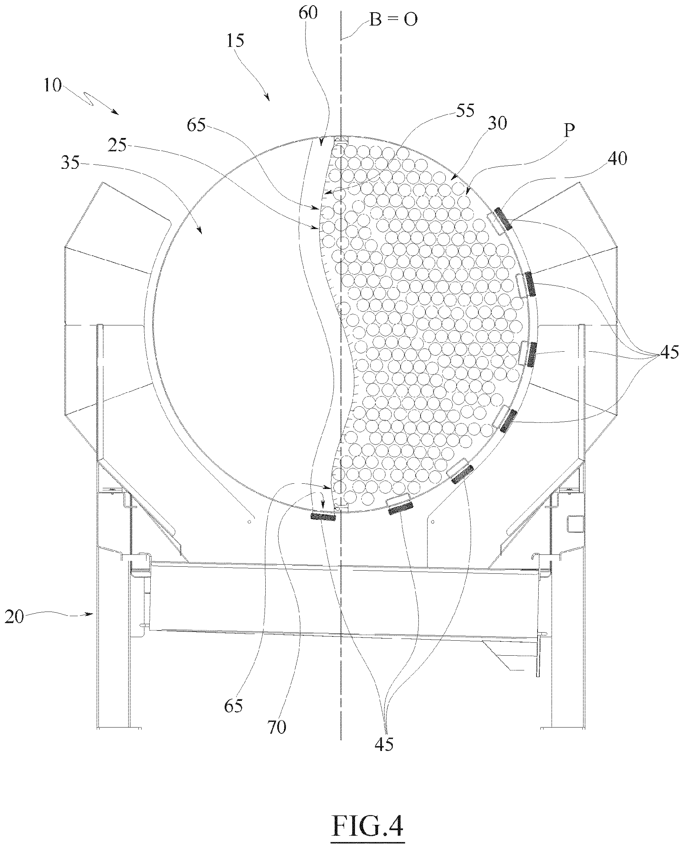

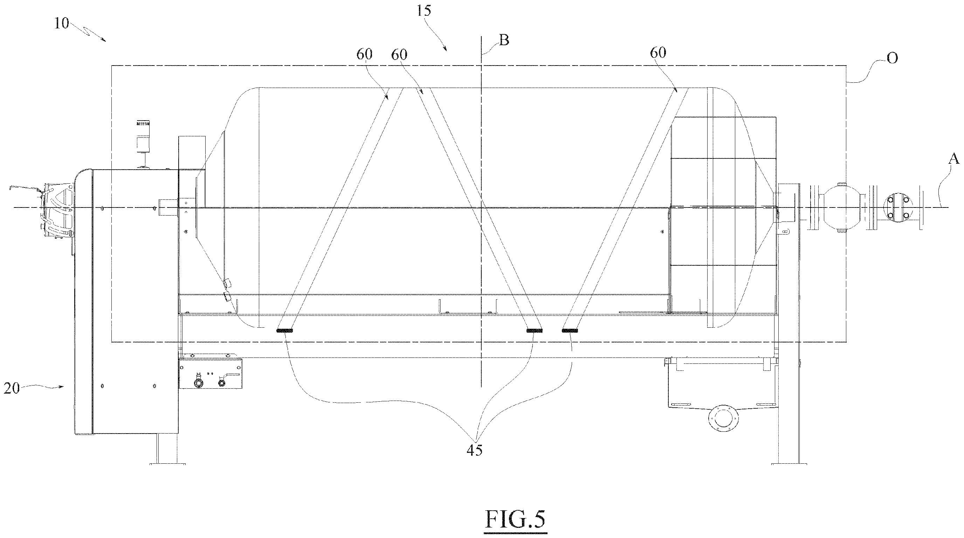

In a second embodiment illustrated in figures 4 and 5, the membrane 25 has several separate permeable portions, i.e. several permeable portions that are fluidly isolated from one another.

Each permeable portion 55 of the membrane 25 extends along the entire transverse development of the tank 15, i.e. the development of the tank 15 along said transverse axis B.

Likewise, each collection channel 60 of each permeable portion 55 extends along the entire transverse development of the tank 15, i.e. the development of the tank 15 along said transverse axis B.

In particular, each permeable portion 55, and therefore each respective collection channel 60, develops substantially along a respective direction parallel to said longitudinal centreline plane O of the tank 15 and transverse to said longitudinal axis A of the tank 15. Furthermore, consecutive permeable portions 55 along the longitudinal axis A of the tank 15, and therefore the respective collection channels 60, develop along respective directions parallel to said longitudinal centreline plane O of the tank 15 and transverse to the longitudinal axis A of the tank 15 and moreover transverse to one another. Moreover in such second embodiment, the first opening 65 and the second opening 70 of each collection channel 60 are adjacent to each other and lie on mutually transverse and incident planes.

Each permeable portion 55 is therefore in fluid-tight communication with a respective discharge mouth 45 of the second chamber 35 by means of the respective collection channel 60, and said respective discharge mouth 45 is made on the tank 15 in position that is close to the first chamber 30.

As better shown in figure 4, the discharge mouths 45 of the first chamber 30 and of the second chamber 35 are therefore arranged on an underlying circumferential portion of the tank 15 at a maximum angle of 180°; preferably the discharge mouths 45 of the first chamber 30 and of the second chamber 35 are arranged on an underlying circumferential portion of the tank at an angle comprised between 100° and 130°.

Thanks to this, in step of discharging the extracted liquid, the discharge mouths 45 of the first chamber 30 and of the second chamber 35 may be simultaneously facing a collection tank of the liquid conveniently fixed to the support frame 20 in position below the tank 15. For example in such second embodiment, it is also possible to provide for the discharge mouths 45 of the second chamber 35 to be aligned with one another along a direction parallel to said longitudinal axis A of the tank 15.

In light of what is described above, the press 10 according to the invention operates as follows.

The tank 15 initially is associated with the frame so that the first chamber 30 is juxtaposed in plan to the second chamber 35.

With the tank 15 in this position, the product P to be squeezed is loaded into the first chamber 30 of the tank 15 by means of one or more access mouths, for example defined in this step by the discharge mouths of the first chamber 30.

In such step, the membrane 25 is in the first configuration, i.e. it does not exert pressure on the product P to be squeezed, i.e. the fluid is put at the aforesaid resting pressure by means of the operating machine.

The pressing step takes place at this point, therefore the membrane 25 is actuated (swollen) by means of (reversible) elastic deformation in the second configuration thanks to the operating machine, which varies the pressure of the fluid from the resting pressure to the aforesaid operating pressure so as to press the membrane 25 against the product P and extract the liquid (juice or must).

The extracted liquid at the interface between the membrane 25 itself and the product P penetrates said one/several permeable portion(s) of the membrane 25 and flows along the collection channel(s) 60 towards the discharge mouth(s) of the second chamber 35. The invention thus conceived is susceptible to many modifications and variants, all falling within the same inventive concept.

Moreover, all the details can be replaced by other technically equivalent elements.

In practice, any materials and also any contingent shapes and sizes may be used, depending on the needs, without departing from the scope of protection of the following claims.

## Claims

1. A press (10), of membrane type, comprising:
- a tank (15);
- a flexible membrane (25) that divides the tank (15) into a first chamber (30), inside of which the product (P) to be squeezed is received and provided with discharge mouths (45) for the extracted liquid, and a second chamber (35) provided with a respective discharge mouth (45), and adapted to contain a fluid under pressure by means of which the membrane (25) exerts a pressure on the product (P) to be squeezed;
**characterized in that** the membrane (25) has at least one permeable portion (55) put in fluid communication with said discharge mouth (45) of the second chamber (35), by means of a collection channel (60) placed inside said second chamber (35).

2. Press (10) according to claim 1, wherein the collection channel (60) is rigidly fixed to the membrane (25) at said permeable portion (55) thereof.

3. Press (10) according to claim 1, wherein the membrane (25) has several separate permeable portions (55), each placed in fluid communication with a respective discharge mouth (45) of the second chamber (35) by means of a respective collection channel (60) placed in the second chamber (35).

4. Press (10) according to claim 1, further comprising conveyor pipes (50) placed in the second chamber (35), adapted to convey said fluid under pressure towards the membrane (25).

5. Press (10) according to claim 1, wherein the permeable portion (55) of the membrane (25) extends continuously along the entire axial development of the tank (15) along a longitudinal axis (A).

6. Press (10) according to claim 1, wherein the permeable portion (55) of the membrane (25) extends continuously along an entire development of the tank (15) along a transverse axis (B).

7. Press (10) according to claim 1, wherein the membrane (25) is made of polyurethane.

8. Press (10) according to claim 1, wherein the collection channel (60) is made of an elastic material.
